# EUROPEAN PATENT APPLICATION

(11) **EP 2 236 891 A1**
(43) Date of publication of application: **06.10.2010**
(21) Application number: 09704638.7
(22) Date of filing: 16.01.2009
(51) Int. Cl.: F16L 23/024, F16L 13/10, F16L 23/026, F16L 23/028

(54) **FLANGE COUPLING, AND METAL PIPE JOINING STRUCTURE**

(30) Priority: 23.01.2008 JP 2008012866
(71) Applicant: Nihonkansen Kogyo Kabushiki Kaisha, Hiroshima 721-0956 (JP)
(72) Inventor: KOBAYASHI, Masato, Fukuyama-shi Hiroshima 721-0956 (JP)
(74) Representative: Kramer - Barske - Schmidtchen
(86) International application number: PCT/JP2009/050507
(87) International publication number: WO 2009/093522

(57) **Abstract**

A metal pipe coupling (1) has a sleeve (2a) having, at one end thereof, an insertion hole having a circular cylindrical surface (a1) into which an end of a metal pipe (4) is inserted, a flange (2b) formed at the other end of the sleeve (2a), and a doughnut portion (2d) vertically rising inwardly from the deepest position in the direction of the central axis. The doughnut portion (2d) has an annular surface (a2) having a width corresponding to the wall thickness of the metal pipe (4), and the side surface of the metal pipe (4) makes contact with the annular surface (a2) when the metal pipe (4) is inserted into the sleeve. The circular cylindrical surface (a1) and the outer peripheral surface of the metal pipe (4) are bonded to each other by an adhesive agent. Metal pipe couplings (1) are coupled to each other by means of bolts (5a) and nuts (5b) by using bolt holes (3a) provided in the flanges (3).

## Description

### FIELD OF THE INVENTION

This invention relates to a flange coupling for joining metal pipes such as a hydraulic pipe, and a metal pipe joining structure made use of the flange coupling.

### PRIOR ART

A metal pipe coupling comprising a cylindrical portion and an outer flange has been known from Patent literature 1. One side surface of the cylindrical portion is joined to an end of a steel pipe by welding. The outer flange is formed on an outer periphery of the other side of the cylindrical portion so as to protrude outwardly. Here, the flange has plenty of bolt holes perforated, and thereby, two outer flanges are fastened with bolts face to face.

Patent literature 2 discloses a technique for joining a steel pipe and a flange coupling with a male screw on the outer periphery of the steel pipe and a female screw on the flange coupling instead of welded junction. The flange coupling couples two metal pipes by putting a doughnut-like flange portion 43 having plenty of bolt holes near respective small brim portions 45 and integrating them by fastening means of bolts and nuts, wherein an engaging portion is provided on the circumference and the flange portion 43 is loosely fitted to a step of the engage portion. Here, the flange coupling forms a loose flange. In this technique, the end of the steel pipe must be molded into a male screw beforehand.

Patent literature 3 discloses a technique for joining metal pipes with an adhesive agent. In this technique, two metal pipes to be joined are arranged on a line, a cylindrical joining member 40 is located between ends of the facing metal pipes, and then, the ends of the metal pipes are respectively inserted into both ends of the joining member 40 and bonded by the adhesive agent. The flange member 40 is freely set an interval between the metal pipe and the flange member 40 narrow by reducing an inside diameter of the flange member after inserting the end of the metal pipe therein.

The above-mentioned reference numbers are respectively used in gazettes of the Patent literatures.
Patent literature 1: Japanese Patent Laid Open Publication No. 7-301215
Patent literature 2: Japanese Patent Laid Open Publication No. 9-60774
Patent literature 3: Japanese Patent Laid Open Publication No. 2002-332633

### DISCLOSURE OF THE INVENTION

### PROBLEMS TO BE SOLVED BY THE INVENTION

In joining the metal pipes, it is requested to simplify works on the site as much as possible. Welding or screwing gives a lot of trouble, whereas joining with an adhesive agent is easy. However, when a plumbing place is on a fire, the adhesive agent melts or burns, and therefore, the cylindrical member can not keep the position. Accordingly, when external forces are given to the cylindrical member as another member contacts with it, there is some fear that the cylindrical member easily slides or comes off from the metal pipe and fluids in the pipe leak to the outward at one sweep.

In Patent literature 2, a corrosion-resistant core made of synthetic resin, which is screwed to the flange, is provided to the inside of the steel pipe. However, it burns and disappears at the time of fire.

The present invention aims to prevent the fluids in the pipe from leaking in large quantities or joining members from dropping by preventing the joining members from sliding or coming off at the time of fire in case of adhesive joint.

This inventor clarified, in prior application (Japanese Patent Application No. 2007-337449), that steel pipes or steel products can be joined with an adhesive agent through couplings for adhesive joint so as to have the strength equal to the case of welding joint. On the other hand, the flange coupling in the present invention is so constructed that the metal pipe is joined to the flange coupling and then the flange couplings are joined by bolts and nuts. That is, the prevent invention provides a flange coupling for adhesive joint and proposes to expand a use of adhesive joint by reducing a term for manufacturing or working pipes and by lowering costs without using a fire like the welding joint.

### MEANS TO SOLVE THE PROBLEM

In order to achieve the above-mentioned aims, a flange coupling of the present invention is characterized in comprising a sleeve portion having an insertion hole having a circular cylindrical surface into which an end of a metal pipe is inserted at one end thereof, an end surface vertically rising outwardly to a direction of a central axis at the other end thereof, and an annular surface vertically rising inwardly to the direction of the central axis and having a width corresponding to a wall thickness of the metal pipe at the deepest position in the direction of the central axis of the insertion hole. The brim portion has a surface for joining from the annular surface to the end surface of the sleeve portion.

A metal pipe joining structure of the present invention is characterized in comprising a metal pipe coupling, a metal pipe, an adhesive agent and means of bolts and nuts. The metal pipe coupling comprises sleeve portions and a flange portion. One of the sleeve portions has an insertion hole having a circular cylindrical surface at one end thereof and an end surface vertically rising outwardly to a direction of a central axis at the other end thereof. The other of the sleeve portions is formed to the deepest position in the direction of the central axis of the insertion hole, having an annular surface vertically which rises inwardly to the direction of the central axis and has a width corresponding to a wall thickness of a metal pipe. The flange portion has plenty of bolt holes. One end of the metal pipe is inserted into the insertion hole of the circular cylindrical surface and one end side surface thereof makes contact with the annular surface. An outer peripheral surface of the metal pipe and the circular cylindrical surface are bonded each other by the adhesive agent. By means of bolts and nuts, the bolts pass through the bolt holes and an end surface of one of the sleeve portions is drawn up to an end surface of the other of the sleeve portions.

### EFFECTS OF THE INVENTION

According to the invention, it is possible to provide a technique for joining pipes to a flange coupling for joining by means of bolts and nuts with an adhesive agent. According to this, it is possible to reduce a term for manufacturing or working pipes and to lower costs without using a fire like the welding joint. Besides, it is possible to prevent the adhesive agent from dripping.

Furthermore, even if the adhesive agent is disappeared when the plumbing place is fired, it is possible to prevent the fluids in the pipe leaking in large quantities because the extraction of the pipe can be controlled by contact between a radius surface of the joining member and one end of the metal pipe.

### BRIEF DESCRIPTION OF THE DRAWINGS

[Figure 1] This is a perspective view showing two metal pipes joined through two sets of metal pipe couplings of an example.
[Figure 2] These are a side view and a sectional view of a metal pipe coupling.
[Figure 3] This is a sectional view seen from the front, showing a state in which an end of a metal pipe is inserted into a coupling cylindrical member of the metal pipe coupling and joined with an adhesive agent.
[Figure 4] This is an explanation view for working the metal pipe coupling.
[Figure 5] This is an explanation view for working the metal pipe coupling.
[Figure 6] This is a sectional view of the metal pipe coupling related to another example.
[Figure 7] This is a view of the metal pipe coupling related to another example.
[Figure 8] This is a view of the metal pipe coupling related to another example.
[Figure 9] This is a view of the metal pipe coupling related to another example.

### EXPLANATION OF REFERENCED NUMERALS

- 2: a sleeve portion
- 2b: a brim portion
- 2c: an insertion hole
- 3: a loose flange
- 3a: a bolt hole
- 4: a metal pipe
- 4a: an end
- 5a: a bolt
- 30: a flange

### PREFERRED EMBODIMENT OF THE INVENTION

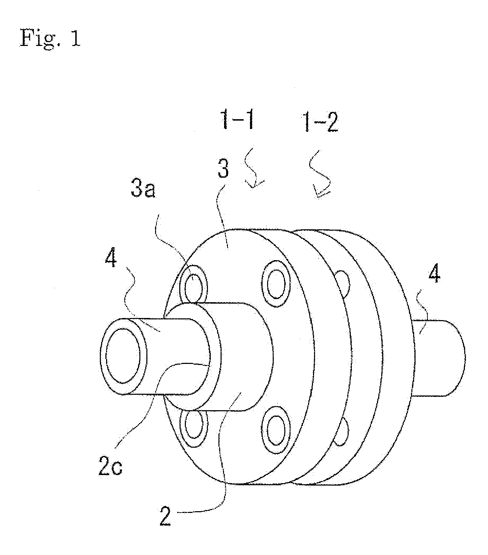

Metal pipe couplings 1-1 and 1-2 in the present invention have the same shape except a different seal structure due to an O-ring as later discussed, namely having a sleeve portion 2 and a loose flange 3 as shown in Fig. 1. Both of them are made of metal materials such as steel materials. The loose flange 3 is a doughnut-like member whose internal hole has an inside diameter larger than an outer peripheral diameter of a circular cylindrical portion 2a of one end of the sleeve portion 2. Besides, the loose flange 3 is loosely fitted on the sleeve portion 2, having bolt holes 3a at an equiangular interval. The sleeve portion 2 has an insertion hole 2c in which a metal pipe (for example, a steel pipe) 4 is inserted, being joined with an adhesive agent.

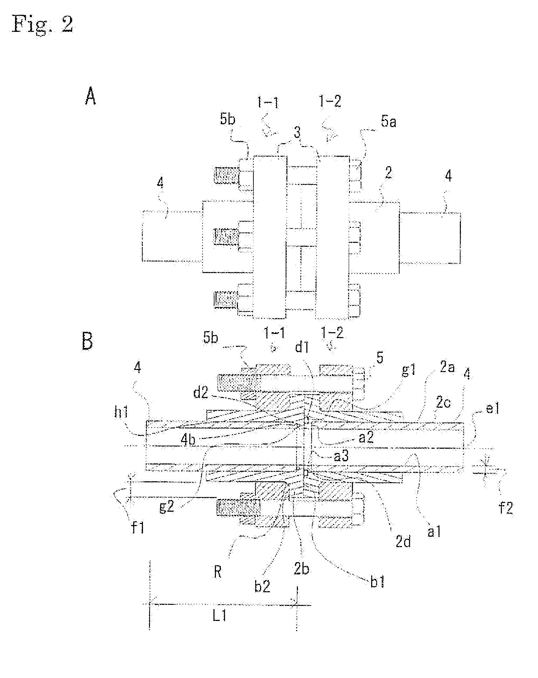

Fig. 2 shows a side view and a sectional view wherein the metal pipe couplings 1-1 and 1-2 are joined with bolts 5. The sleeve portion 2 has the circular cylindrical portion 2a at one end and a brim portion 2b at the other end. The cylindrical portion 2a has the insertion hole 2c in which an end 4a of the metal pipe 4 is inserted, and the loose flange 3 is loosely fitted on the outer peripheral surface of the cylindrical portion 2a freely movably in a direction of the central axis e1 thereof. On the other end of the sleeve portion 2, is provided a doughnut portion 2d together with the brim portion 2b. The brim portion 2b has an end surface b1 vertically rising outwardly in the direction of the central axis e1. The doughnut portion 2d is formed at the deepest position in the direction of the central axis e1 of the insertion hole 2c, vertically rising inwardly from the direction of the central axis. The insertion hole 2c comprises a sleeve internal peripheral surface a1 and an annular surface a2 of the doughnut portion 2d. The sleeve internal peripheral surface a1 is bonded to the outer periphery of the metal pipe 4 with an adhesive agent h1. The annular surface a2 has a width correspondent to the thickness of the metal pipe 4. When the metal pipe 4 is inserted into the insertion hole 2c, the annular surface a2 is joined to a surface a3 on the same plane of the internal peripheral surface of the metal pipe 4. The surface a3 is parallel to the central axis e1, being joined to one side end surface b1. Thus constructed metal pipe coupling is discussed later.

The brim portion 2b has the other end of the sleeve portion 2 protruded to an outside f1 in a radius direction by a length that does not interfere to the bolt 5a, having the side end surface b1 for securing a fluid airtightness. The annular surface b2 is located at the outside f1 in the radius direction from the outer peripheral surface of the cylindrical portion 2a, being in contact with the flange 3. A portion rising from the cylindrical portion 2a is joined to the brim portion 2b through a curve of a circle R.

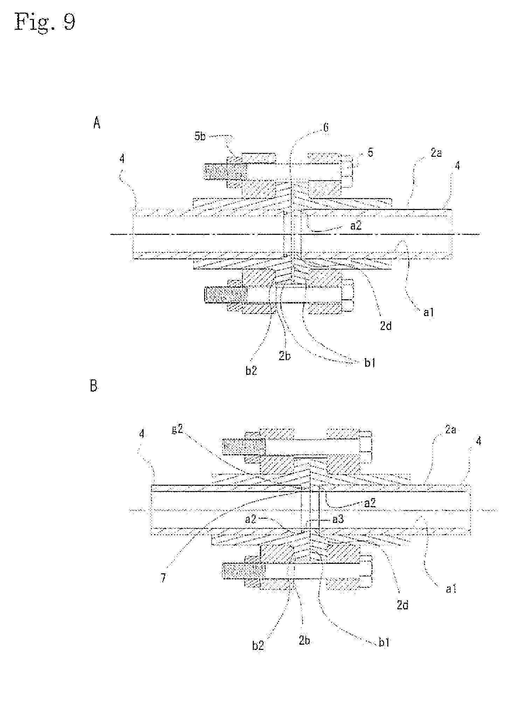

The end surface b1 (of left side) of the sleeve portion 2 of the metal pipe coupling 1-2 is a plane intersecting to the central axis e1 perpendicularly. An O-ring groove g1 for fitting the O-ring d1 is formed concentrically with the insertion hole 2c. Here, the end surface b1 (of right side) of the sleeve portion 2 of the metal pipe coupling 1-1 is also a plane intersecting to the central axis e1 perpendicularly. Accordingly, each of the metal pipe coupling 1-1, 1-2 secures a fluid airtightness by inserting the O-ring d1. Besides, in a low pressure pipe, as shown in Fig. 9a, the metal pipe coupling 1-2 is made the same shape as the metal pipe coupling 1-1 which has no O-ring groove g1, and therefore, the fluid airtightness between the facing end surfaces b1 is secured by using a doughnut-plate-like packing 6 having a hollow instead of the metal pipe coupling 1-2.

The annular surface a2 of the doughnut portion 2d of the metal pipe coupling 1-1 is a plane intersecting to the central axis e1 perpendicularly. An O-ring groove g2 for fitting the O-ring d2 is formed concentrically with the insertion hole 2c. The O-ring d2 secures the fluid airtightness between one side surface 4b of the metal pipe 4 and the annular surface a2. Hence, the O-ring d2 can prevent the adhesive agent h1 from dropping from the side surface 4b to the inside of the metal pipe 4. The adhesive agent protruded and coagulated in the metal pipe 4 may be peeled by the fluids flowing in the metal pipe 4. If the adhesive agent h1 does not generate an oozy drop, the O-ring groove g2 is unnecessary. Here, the metal pipe coupling 1-2 has no O-ring grooves g2. Besides, the O-ring groove g2, as shown in Fig. 9b, may be a step 7 having a wall facing from the surface a2 to the end surface b1, whose bottom opens to the surface a3 side. There should be a cavity portion such as the O-ring groove g2 or the step 7 to accommodate the O-ring d2.

It is obvious from the above-mentioned construction that the end surface b1 of the other side of the sleeve portion 2 bridges between the brim portion 2b and the doughnut portion 2d.

Although the loose flange 3 and the sleeve portion 2 are separated to pieces in this embodiment, they can be unified. Thus constructed metal pipe coupling will be discussed later.

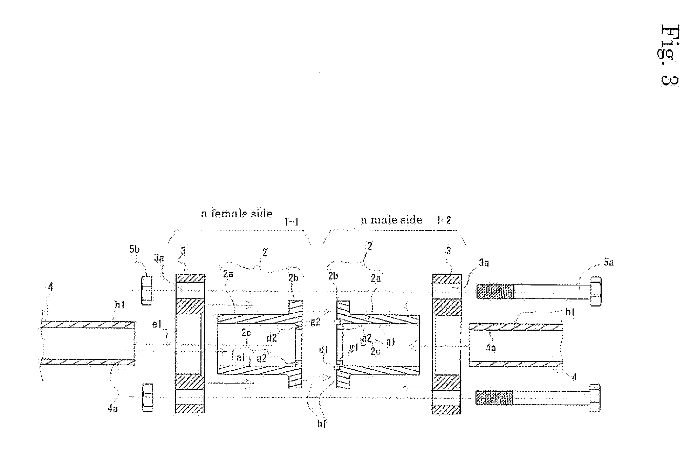

The next example will be explained with reference to Fig. 3, wherein right and left metal pipes (JIS standardized goods) 4 are fluid-tightly joined with two sets of metal pipe couplings 1-1, 1-2. Besides, the metal pipe coupling 1-1 has no O-ring groove g1 on the end surface b1 of the sleeve portion 2, being called a male side. On the other hand, the metal pipe coupling 1-2 has the O-ring groove g1, being called a female side. Here, the male side and the female side are used as a pair. In this figure, the O-ring groove g2 is provided to the metal pipe coupling 1-1, but it is not essential as discussed earlier. The O-ring groove g2 may be provided on the female side.

The metal pipes 4 to be coupled are arranged on such a line as ends 4a of one side of them face to face each other. The metal pipes 4 are cut with a disk-cutter, and the tips of the ends 4a are respectively adjusted so that each rough cutting end surface forms a smooth surface intersecting to a length direction perpendicularly with a sander grinder.

The adhesive agent h1 is glued to at least either the end 4a or the insertion hole 2c (in the figure, to the end 4a side), the O-ring d2 is interfitted in the O-ring groove g2, and thereafter, the end 4a of the metal pipe 4 is inserted into the insertion hole 2c of the sleeve portion 2. The tip of the end 4a of the metal pipe 4 is made contact with the annular surface a2, and then, the adhesive agent h1 is stiffened. For the adhesive agent h1, epoxy resin is preferable.

The insertion hole 2c and the end 4a of the metal pipe 4 in each of the metal pipe couplings 1-1, 1-2 is joined with an adhesive so that the adhesive strength is higher than a tensile strength of the metal pipe 4. Concretely, the length L1 of the sleeve portion 2a (Fig. 1) is selected so that the value that multiplies the tensile strength of the adhesive agent h1 and an adhesion area between the outer peripheral surface of the end 4a and the insertion hole 2c together is higher than the tensile strength of the metal pipe 4.

A bonding technique of the metal pipe coupling, which makes use of an adhesive agent, has been described in the applicant's prior application (Japanese Patent Application No. 2007-337449). A particularly related thing is concretely explained as follows. That is, the inside diameter of the sleeve internal peripheral surface a1 is 0.2mm - 0.6mm larger than the outer diameter of the end 4a of the metal pipe 4. This gap had better be uniform as possible. The thickness of the cylindrical portion 2a at the deepest part of the insertion hole 2c (the thickness of the outer peripheral wall of the insertion hole 2c) is determined so as to get strength larger than the tensile strength of the metal pipe 4.

Next, the O-ring d1 is interfitted in the ring groove g1, and the side end surfaces b1 of the metal pipe couplings 1-1, 1-2 are faced to face each other. Under this condition, the bolts 5a are inserted in the bolt holes 3a of the loose flanges 3 from right and left sides of the metal pipe couplings 1-1, 1-2 so as to bridge them, and the nuts 5b are screwed thereon and fastened. In this way, right and left loose flanges 3 are pulled and joined.

Thus two metal pipes 4 are coupled fluid-tightly by gluing the adhesive agent h1, fitting each member, then fastening the bolt 5a and the nut 5b. Accordingly, it is possible to carry out plumbing pipe laying work in an inflammable territory without using a fire.

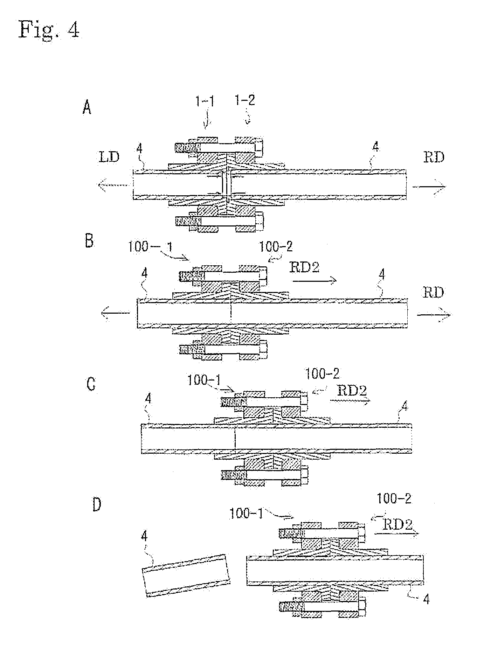

Fig. 4 is a view for explaining the principle that the metal pipe couplings 1-1, 1-2 are detached from the metal pipe 4 even if external forces in the direction of the central axis e1 act on the cylindrical member 2 under the condition where an adhesive ability of the adhesive agent h1 disappears due to burning or carbonizing. The other end of each metal pipe 4 is fixed to a machine in a plant or a pipe fixing band, and therefore, movements in directions "LD", "RD", which the right and left metal pipes 4 separate, are regulated. Accordingly, even if the external forces are added to the metal pipe couplings 1-1, 1-2, the metal pipe couplings 1-1, 1-2 are never moved by the external forces in either right and left directions because the annular surface a2 makes contact with the side surface 4b of the metal pipe 4 (Fig. 4a).

Fig. 4b shows the state for using metal pipe couplings 100-1, 100-2 which each sleeve internal peripheral surface a1 has no an annular surface a2 and reaches the side end surface b1 as it has the same radius. In case there are no annular surfaces a2, the metal pipe couplings 100-1, 100-2 move in the right or left direction (in this figure: the right direction) by external forces "RD2" as they are coupled (Fig. 4c), and at last get over the position of the coupling surface of the metal pipes 4 (Fig. 4d). In this state, the metal pipes 4 are released from coupling, thereby causing the fluid to leak from the pipe.

Thus, the sleeve portion 2 is regulated from moving in the direction of the central axis e1 by the contact between the end 4a of each metal pipe 4 and its corresponding annular surface a2. According to this, a sudden leak of the fluid in the metal pipe 4, which is caused by the movement of the sleeve portion 2, is prevented, and pulling-out or falling-out of the cylindrical member 2 or the flange 3, which is caused by position sift of the metal pipe 4 and the fluid pressure therein, is restricted.

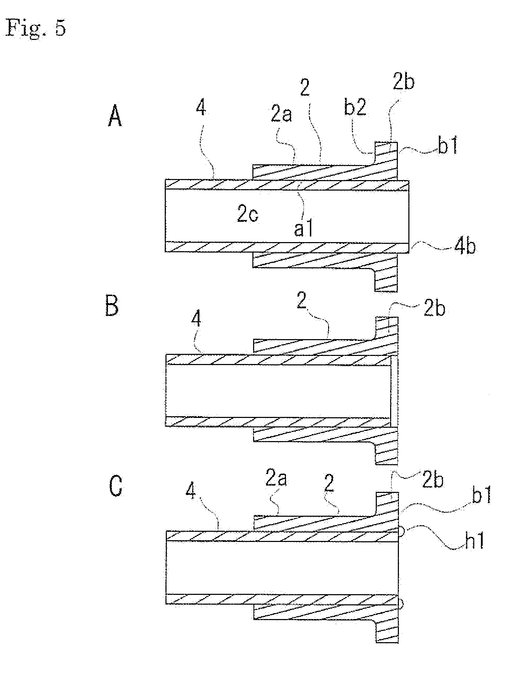

When inserting the metal pipes 4 into the insertion holes 2c of the metal pipe couplings 1-1, 1-2 respectively, each annular surface a2 makes contact with the side surface 4b of the metal pipe 4 and contributes to positioning. Fig. 5 illustrates only sleeve portion 2 that is coupled with the metal pipe coupling 100-1 having no annular surface a2. In Fig. 5a, one side surface 4b of the metal pipe 4 protrudes from the end surface b1 of the sleeve portion 2. In this condition, the airtightness in coupling the metal pipe couplings 1-1, 1-2 is hindered from keeping. In case of Fig. 5b, conversely, the side surface 4b does not reach the end surface b1 of the sleeve portion 2, and a pool of the fluid flowing through the metal pipe 4 is formed. When the adhesive agent h1 glued between the sleeve internal peripheral surface a1 and the outer peripheral surface of the metal pipe 4 drips in the fluid pool, the solidified adhesive agent may drop. Even if one side surface 4b of the metal pipe 4 is precisely fitted to the end surface b1 of the sleeve portion 2, unnecessary fluid adhesive agent drips and obstructs the coupling between the metal pipes.

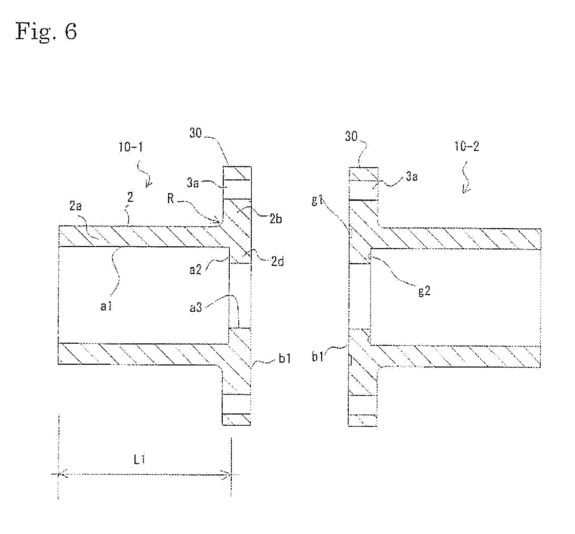

Fig. 6 is an elevation partly in section, showing the state where a metal pipe coupling 10 of another embodiment is used. In the previous embodiment, the loose flange 3 is provided. On the other hand, in this embodiment, the loose flange 3 is integrated with the sleeve portion 2 of the previous embodiment. A brim portion 2d of the other end of the sleeve portion 2 is further outwardly extended to form a flange 30 having bolt holes. A metal pipe coupling 10-1 is a male side having no O-ring grooves on the end surface b1, and a metal pipe coupling 10-2 is a female side having an O-ring groove thereon. Here, a male side and a female side work in pairs.

The length L1 of the sleeve internal peripheral surface a1 is so determined that a value multiplied the tensile strength of the adhesive agent h1 by an area of the sleeve internal peripheral surface a1 according to the length L1 is higher than the tensile strength of the metal pipe 4. The cylindrical member 2 and the flange 30 perpendicularly rising from the cylindrical member 2 are connected by a curve of a circle R. Here, a member functioning such as the loose flange 3 or the flange 30 is called a flange portion.

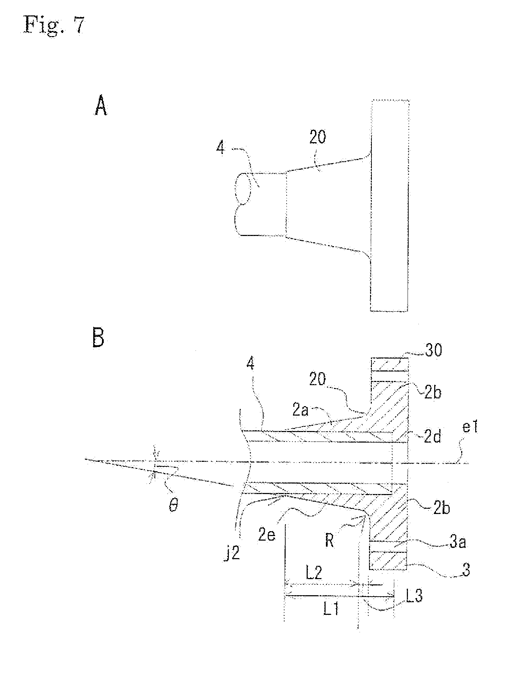

Fig. 7 shows another embodiment. A metal pipe coupling 20 is different from the metal pipe coupling 10 of the previous embodiment in a point that a taper surface portion 2e is formed on the outer peripheral surface instead of the cylindrical portion 2a of the sleeve portion 2. The diameter is diminished by gradually decreasing the thickness toward an entrance of the insertion hole 2c or enlarged by gradually increasing the thickness from the entrance toward the depth. Another point is the same constitution as the metal pipe couplings 1, 10 of the previous embodiments have. This figure shows the metal pipe coupling 20 of a male side.

The taper surface portion 2e has an inclination angleθfor the central axis e1 less than 12 degrees. The thickness of an end point j2 of an entrance side of the insertion hole 2c is reduced within the range where one end 4a of the metal pipe 4 can be easily inserted into the insertion hole 2c. For example, it is about 0mm - 3mm.

As for the metal pipe coupling 20, a tensile load in the direction of the central axis e1 disperses through the taper surface portion 2e in comparison with the previous embodiment and stress concentration is controlled. In the metal pipe coupling 20, the taper surface portion 2e and the flange 30 rising from the taper surface portion 2e are connected with a curve of the circle R. The curve starts from a position of the length L2 from the end point j2 and the curve of the length L3 more continues. When the inclination angleθis less than 12 degrees, the taper surface portion 2e is warped at an area of 20 % from the entrance in case the length from the end point j2 to the depth of the insertion hole 2c is 100%. Accordingly, the length L2 is determined except an area 20 % near the entrance, and then the length L3 are determined.

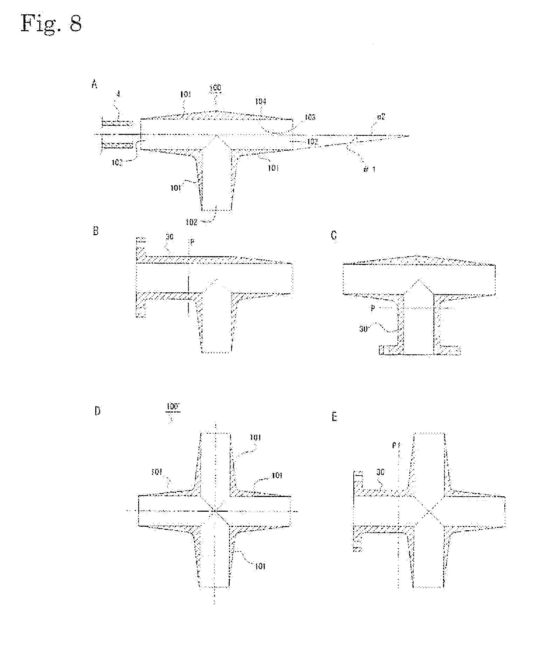

Fig. 8 shows another embodiment. A hub portion 101 of a three-way metal pipe coupling 100 as shown in Fig. 8a and a four-way metal pipe coupling 101 as shown in Fig. 8d are changed to a sleeve portion 30 for applying this embodiment.

In the metal pipe coupling 100, the hub portion 101 has an insertion hole 102 for inserting the metal pipe 4, and an inside peripheral wall 103 of the insertion hole 102 and the outer periphery of the metal pipe 4 are bonded by the adhesive agent. The hub portion 101 has a taper outer peripheral wall 104 whose thickness is thickened from the entrance of the insertion hole to the depth direction. The inside diameter of the insertion hole 102 is 0.2 mm - 0.6 mm larger than the outside diameter of the metal pipe 4. The adhesion area for adhesive agents between the outer metal pipe 4 and the internal peripheral wall 103 is determined so that a value multiplied the adhesion area by the tensile strength of the adhesive agents is higher than the tensile strength of the metal pipe 4. The taper surface of the outer peripheral wall 104 has the inclination angleθfor the central axis e2 less than 12 degrees. Besides, the thickness of the entrance side of the insertion hole 101 is reduced in the range where the metal pipe 4 can be easily inserted into the insertion hole 102. For example, the thickness is about 0mm - 3mm.

In Fig. 8b, a hub portion 101 of the left side of the metal pipe coupling 100 is changed to the sleeve portion 30 in the previous embodiment. In the figure, a portion from a dashed line P to the entrance is changed to the sleeve portion 30. In Fig. 8c, a downward hub portion 101 is changed to the sleeve portion 30. In Fig. 8e, a hub portion of the left side of the four-way metal pipe coupling 100' is changed to the sleeve portion 30. Besides, by specifications for the metal pipe 4 to be used, the hub portions more than two may be changed to the sleeve portion 30, and the changed hub portion 101 is also optional.

In each embodiment of Fig. 8, the male side is an object. However, it is obvious that the female side can be also an object. As the coupling of the female side, any of metal pipe couplings 1, 10, 100 can be used.

In the above-mentioned embodiments, the end 4a of the metal pipe 4 can be quenched or cold worked. In this case, this range is defined more than the range to be bonded by the adhesive agent h1. According to these treatments, the end 4a of the metal pipe 4 has the diameter reduced by the tension in the direction of the central axis e1, and therefore, the adhesive surface is controlled from transformation and the strength of the joined place is further increased.

## Claims

1. A flange coupling, comprising:
a sleeve portion having an insertion hole having a circular cylindrical surface into which an end of a metal pipe is inserted at one end thereof, an end surface vertically rising outwardly to a direction of a central axis at the other end thereof, and an annular surface vertically rising inwardly to the direction of the central axis and having a width corresponding to a wall thickness of the metal pipe at the deepest position in the direction of the central axis of the insertion hole;
wherein said brim portion has a surface connected from the annular surface to the sleeve portion.

2. A flange coupling, comprising:
in a metal pipe coupling as claimed in claim 1,
a brim portion vertically rising outwardly to the direction of the central axis at an outer peripheral portion of the other end of the sleeve portion;
a loose flange being loosely inserted and making contact with the outer peripheral surface of the sleeve portion;
wherein said loose flange has plenty of bolt holes in the direction of the central axis at an equiangular interval.

3. A flange coupling, comprising:
in a metal pipe coupling as claimed in claim 1,
a brim portion vertically rising outwardly to the direction of the central axis at an outer peripheral portion of the other end of the sleeve portion;
wherein said brim portion forms a flange having plenty of bolt holes in the direction of the central axis at an equiangular interval.

4. A flange coupling, comprising:
in a metal pipe coupling as claimed in claim 2 or 3,
a groove for inserting an O-ring circumferentially on the end surface of the sleeve portion.

5. A flange coupling, comprising:
in a metal pipe coupling as claimed in claim 4,
a cavity portion for inserting an O-ring circumferentially on the annular surface.

6. A flange coupling, in a metal pipe coupling as claimed in claim 1, wherein an inside diameter of the insertion hole is larger 0.2mm - 0.6mm than an outside diameter of the metal pipe.

7. A flange coupling, in a metal pipe coupling as claimed in claim 1, wherein the sleeve portion increases in the thickness of the outer peripheral surface gradually from the insertion hole toward the depth.

8. A flange coupling, in a metal pipe coupling as claimed in claim 1, wherein an adhesion area between the metal pipe and the insertion hole is determined so that a value multiplied a tensile strength of adhesive agents to be used by the adhesion area is higher than a tensile strength of the metal pipe.

9. A flange coupling, in a metal pipe coupling as claimed in claim 8, wherein the end of the metal pipe to be inserted into the insertion hole is quenched in advance.

10. A metal pipe joining structure, comprising:
a metal pipe coupling comprising:
a sleeve portion having an insertion hole having a circular cylindrical surface at one end thereof and an end surface vertically rising outwardly to a direction of a central axis at the other end thereof;
a sleeve portion formed to the deepest position in the direction of the central axis of the insertion hole, having an annular surface vertically rising inwardly to the direction of the central axis, and having a width corresponding to a wall thickness of the metal pipe; and
a flange portion having plenty of bolt holes;
a metal pipe whose one end being inserted into the insertion hole and one end side surface making contact with the annular surface;
an adhesive agent for bonding an outer peripheral surface of the metal pipe and the circular cylindrical surface; and
means of bolts and nuts wherein the bolts pass through the bolt holes and an end surface of one sleeve portion is drawn to an end surface of the other sleeve portion.

11. A metal pipe joining structure as claimed in claim 10, wherein a groove is formed on a circumference of the end surface vertically rising outwardly and an O-ring is inserted therein.
